(19) Europäisches Patentamt
European Patent Office
Office européen des brevets

(11) **EP 1 644 156 B1**

(12) **EUROPÄISCHE PATENTSCHRIFT**

(45) Veröffentlichungstag und Bekanntmachung des Hinweises auf die Patenterteilung:
**19.05.2010 Patentblatt 2010/20**

(21) Anmeldenummer: **04762346.7**

(22) Anmeldetag: **06.07.2004**

(51) Int Cl.:
*B23K 10/00* *(2006.01)*     *H05H 1/34* *(2006.01)*
*H05H 1/36* *(2006.01)*

(86) Internationale Anmeldenummer:
**PCT/DE2004/001442**

(87) Internationale Veröffentlichungsnummer:
**WO 2005/007332 (27.01.2005 Gazette 2005/04)**

(54) **VERFAHREN ZUR VERSORGUNG EINES PLASMABRENNERS MIT EINEM GAS, MISCHGAS ODER GASGEMISCH MIT DURCHFÜHRUNG DER VOLUMENSTROMREGELUNG IN KOMBINATION MIT EINER DRUCKREGELUNG ; ANORDNUNG ZUR DURCHFÜHRUNG DIESES VERFAHRENS**

METHOD FOR SUPPLYING A PLASMA TORCH WITH A GAS, MIXED GAS, OR GAS MIXTURE, COMPRISING VOLUMETRIC FLOW REGULATION IN COMBINATION WITH PRESSURE REGULATION; AND ARRANGEMENT FOR CARRYING OUT SAID METHOD

PROCEDE PERMETTANT D'ALIMENTER UNE TORCHE A PLASMA AVEC UN GAZ, UN GAZ MIXTE OU UN MELANGE GAZEUX PAR REGULATION COMBINEE DU DEBIT VOLUMETRIQUE ET DE LA PRESSION, ET DISPOSITIF SERVANT A LA MISE EN OEUVRE DE CE PROCEDE

(84) Benannte Vertragsstaaten:
**AT BE BG CH CY CZ DE DK EE ES FI FR GB GR HU IE IT LI LU MC NL PL PT RO SE SI SK TR**

(30) Priorität: **11.07.2003 DE 10332569**

(43) Veröffentlichungstag der Anmeldung:
**12.04.2006 Patentblatt 2006/15**

(73) Patentinhaber: **Kjellberg Finsterwalde Plasma und Maschinen GmbH**
**03238 Finsterwalde (DE)**

(72) Erfinder:
 • **KRINK, Volker**
  **03238 Finsterwalde (DE)**
 • **IRRGANG, Gerhard**
  **03238 Finsterwalde (DE)**

 • **LAURISCH, Frank**
  **03238 Finsterwalde (DE)**
 • **STEUDTNER, Thomas**
  **04910 Elsterwerda (DE)**

(74) Vertreter: **Manasse, Uwe et al**
**Forrester & Boehmert**
**Pettenkoferstrasse 20-22**
**80336 München (DE)**

(56) Entgegenhaltungen:
**DE-U- 20 121 641     US-B1- 6 232 575**
**US-B1- 6 359 251**

 • **PATENT ABSTRACTS OF JAPAN Bd. 199, Nr. 901, 29. Januar 1999 (1999-01-29) & JP 10 263827 A (AMADA CO LTD), 6. Oktober 1998 (1998-10-06)**

**Beschreibung**

Die vorliegende Erfindung betrifft ein Verfahren zur Versorgung eines Plasmabrenners mit einem Gas, Mischgas oder Gasgemisch, bei dem eine Volumenstromregelung des Gases bzw. Mischgases bzw. Gasgemisches durchgeführt wird. Außerdem betrifft die vorliegende Erfindung eine Anordnung zur Versorgung eines Plasmabrenners mit einem Gas oder Mischgas oder Gasgemisch, mit einer Einrichtung zur Zuführung eines Volumens eines Gases oder Mischgases oder Gasgemisches mit einer gewünschten Gaszusammensetzung zum Plasmabrenner und einer Volumenstromregeleinrichtung zur Regelung des Volumenstromes des Gases oder Mischgases oder Gasgemisches.

Als Plasmagas werden unterschiedliche Gase, zum Beispiel das einatomige Argon und/oder die zweiatomigen Gase Wasserstoff, Stickstoff, Sauerstoff oder Luft eingesetzt. Diese Gase ionisieren und dissoziieren durch die Energie des Plasmalichtbogens. Ein Plasmamischgas ist ein bereits vom Lieferanten vorgemischtes Plasmagas, während ein Plasmagasgemisch ein erst vor Ort gemischtes Plasmagas ist.

In der Regel wird bei einem Plasmabrenner das Plasma durch eine wassergekühlte Düse eingeschnürt. Dadurch können Energiedichten bis $2 \times 10^6$ W/cm$^2$ erreicht werden. Im Plasmabogen eines Plasmaschneidbrenners entstehen Temperaturen bis 30.000 °C, die in Verbindung mit der hohen Strömungsgeschwindigkeit des Plasmagases sehr hohe Schneidgeschwindigkeiten an allen elektrisch leitfähigen Werkstoffen realisieren. und Werkstück vor. Berührt der Pilotbogen das Werkstück, kommt es zur Ausbildung des Schneidlichtbogens.

Plasmaschneiden ist ein etabliertes Verfahren zum Schneiden elektrisch leitender Werkstoffe. Je nach Schneidaufgabe werden unterschiedliche Gase und Gasgemische eingesetzt. Übliche Gase und Gasgemische sind zum Beispiel Luft, Sauerstoff, Stickstoff und deren Gasgemische sowie Argon/Wasserstoff/Stickstoff-Gemische.

Unlegierte Stähle werden in der Regel mit Luft oder Sauerstoff geschnitten. Legierte Stähle und Nichteisenmetalle werden vorzugsweise mit speziellen Argon-Wasserstoff , Stickstoff-Wasserstoff bzw. Argon-Wasserstoff Stickstoff Gemischen geschnitten. Zur Verbesserung der Schnittqualität wird heutzutage auch ein zusätzliches Sekundärgas, das den Plasmastrahl zusätzlich umströmt, eingesetzt. Das zusätzliche Sekundärgas hat die Aufgaben, die Düse des Plasmaschneidbrenners bei Einstechen in das Werkstück vor zurückspritzendem Werkstückmaterial und damit vor einer Schädigung zu schützen, die Schmelze beim Schneiden so zu beeinflussen, daß ein bartfreier Schnitt entsteht und als Schutzgas die bereits geschnittene und noch heiße Schnittoberfläche vor Oxidation zu schützen.

Diese Plasma- und Sekundärgase sowie -mischgase und -gasgemische werden über Leitungen und Magnetventile den Plasmaschneidbrennern zugeführt. Eine Dosierung dieser Gase erfolgt meistens über die Stellung oder Regelung des Druckes.

Die Druckregelung kann sowohl mechanisch über Druckminderer, als auch elektronisch über Druckregelventile erfolgen. Der Einsatz elektronischer Druckregler ist insbesondere in automatisierten Systemen, bei denen unterschiedlichste Parameter des Plasmaschneidens, wie der Schneidstrom, die Schneidspannung, der Gasdruck, die Schneidgeschwindigkeit, die Materialdicke und der Plasmaschneidbrennerabstand in Datenbanken abgelegt sind, um eine möglichst hohe Reproduzierbarkeit des Schnittergebnisses zu erreichen, üblich.

So wird in der DE 195 36 150 C2 eine Einrichtung und ein Verfahren zur Gassteuerung eines Plasmabrenners beschrieben, bei denen die Gasströmung durch eine Anordnung bestehend aus einem Proportionalventil, einem Drucksensor und einer Blende im Plasmabrenner eingestellt wird.

In der EP 0 697 935 B1 erfolgt die Gasdosierung mit Hilfe veränderlicher Nadelventile. Der Querschnitt der Nadelventile bestimmt in Kombination mit dem eingestellten Druck die Gasmenge. Der Volumenstrom kann dabei mit Hilfe von Schwebekörper-Meßröhren angezeigt werden.

Eine Erzeugung von Gasgemischen, die insbesondere für die Bearbeitung von legierten Stählen und Nichteisenmetallen benötigt werden, kann jedoch mit Hilfe einer Druckregelung nicht reproduzierbar erfolgen. Es wurde daher versucht, durch Hilfseinrichtungen diesen Nachteil zu verringern. So wird in der DD 54 347 der Einsatz einer Mischkammer mit Druckblenden beschrieben. Dies schafft aber auch keine Abhilfe, da das Mischungsverhältnis stark begrenzt ist.

Besonders das Mischen von Gasen unterschiedlicher Dichte und unterschiedlichster Mischungsverhältnisse bereitet die größten Schwierigkeiten. Auch der Einsatz verschiedener bekannter Mischeinrichtungen, wie zum Beispiel T-Fittings, Injektoren, Labyrinthanordnungen und Anordnungen von Düsen, wie zum Beispiel in der DD 132247 beschrieben, können nicht die optimalen benötigten unterschiedlichsten Mischungsverhältnisse erzeugen.

Es ist aber auch eine Gasdosierung mittels reiner Volumenstromregelung bekannt. Damit können definierte Gasgemische reproduzierbar erzeugt werden.

Es ist aber auch eine Gasdosierung mittels reiner Volumenstromregelung bekannt. Damit können definierte Gasgemische reproduzierbar erzeugt werden.

In der US-6,972,248 B1 werden ein Verfahren und eine Anordnung zur Reduzierung des Elektroden- und Düsenverschleißes beim Sauerstoff-Plasmaschneiden durch Verwendung eines Sauerstoff-Stickstoff-Gemisches anstelle reinen Sauerstoffs beschrieben. Bei dem bekannten Verfahren wird ein konstanter Volumenstrom der einzelnen Plasmagase mittels einer Anordnung, bestehend aus Nadelventilen und Differenzdruckmessern, derart erzeugt, daß der Differenzdruck vor und hinter den Differenzdruckmessern mit Hilfe der vorgeschalteten Nadelventile, konstant gehalten wird. Zwischen den Regelstrecken und dem Plasmabrenner befinden sich Druckreduzierventile, die den Maximaldruckversorgungsdruck für den Plasmabrenner begrenzen.

Wenn eine Volumenstromregelung zwar einen in Abhängigkeit vom Meßverfahren nahezu konstanten Volumenstrom eines Gases bzw. mehrerer Gase und eine reproduzierbare Herstellung eines Gasgemisches ermöglicht, ist die damit erzielbare Schnittqualität der geschnittenen Materialien, insbesondere beim Schnittbeginn, ungenügend. Die ungenügende Schnittqualität kann zum Beispiel in einem unsicheren Einstechen (zum Beispiel kein oder verzögertes Übersetzen eins Pilotbogens) in das zu schneidende Material, unsicherem Durchschneiden (zum Beispiel Stehenbleiben von Material), Bartbildung (Schlacke an Werkstück-unterseite) und starker Winkelabweichung (zum Beispiel Überschreitung von Rechtwinkeligkeits- oder Neigungstoleranz) bestehen.

US-B-6 359 251 B1, die den Oberbegriff des Ansprüche 1 und 13 offenbart, offenbart ein Verfahren und eine Anordnung zur Versorgung eines Plasmabrenners mit einem Gas, Mischgas oder Gasgemisch. Bei dem Verfahren werden PFC-Ventile verwendet. In Kombination mit einer Steuerung CNC kann dadurch ein genaues Volumen des/der Gas/e zum Bearbeitungsort geführt werden.

DE 201 21 641 U1 beschreibt eine Anordnung zur Versorgung eines Plasmabrenners mit ein Plasmagas oder Plasmamischgas oder Plasmagasgemisch umfassendem Gas, mit einer Einrichtung zur Zuführung eines Plasmagases oder Plasmamischgases oder Plasmagasgemisch zu einem Plasmabrenner, wobei eine Volumenstromregeleinrichtung zur Regelung des Volumenstromes des Plasmagases bzw. Plasmamischgases bzw. Plasmagasgemisches vorgesehen ist, dadurch gekennzeichnet, dass sie mindestens eine Volumenstromregeleinrichtung auf der Basis der Messung des Volumenstromes aus dem Differenzdruck über eine Meßblende umfasst.

Der Erfindung liegt somit die Aufgabe zugrunde, ein Verfahren und eine Anordnung bereitzustellen, mit denen sich bessere Schnittqualitäten erzielen lassen.

Erfindungsgemäß wird diese Aufgabe gelöst durch ein Verfahren zur Versorgung eines Plasmabrenners mit einem Gas, Mischgas oder Gasgemisch gemäß dem Anspruch 1.

Zudem wird diese Aufgabe gelöst durch eine Anordnung zur Versorgung eines Plasmabrenners mit einem Gas oder Mischgas oder Gasgemisch gemäß dem Anspruch 13.

Bei dem Verfahren kann vorgesehen sein, daß der Druck im Innenraum des Plasmabrenners zwischen der Elektrode und der Plasmabrennerdüse des Plasmabrenners direkt oder indirekt gemessen wird.

Insbesondere kann dabei vorgesehen sein, daß der Druck in Gaszuführungsrichtung vor dem Plasmabrenner gemessen wird.

Gemäß einer weiteren besonderen Ausführungsform der Erfindung kann vorgesehen sein, daß die Volumenstromregelung mittels einer Volumenstromregeleinrichtung bzw. mittels Volumenstromregeleinrichtungen durchgeführt wird und der Druck zwischen der bzw. den Volumenstromregeleinrichtung(en) und dem Plasmabrenner gemessen wird.

Weiterhin ist denkbar, daß die Drücke der Einzelgase oder einzelnen Mischgase gemessen werden und ein mittlerer Druck aus den gemessenen Drücken gebildet wird.

Alternativ können die Einzelgase oder einzelnen Mischgase zusammengeführt werden und der resultierende Druck gemessen werden. Die Zusammenführung der Einzelgase oder Mischgase kann zum Beispiel dadurch erfolgen, daß die Gasschläuche, in denen die Einzelgase oder Mischgase zugeführt werden, miteinander verbunden werden. Dadurch entsteht ein gemeinsamer Raum, in dem sich alle drei Einzelgase bzw. Mischgase befinden.

Weiterhin kann auch vorgesehen sein, daß mindestens zwei Einzelgase oder Mischgase zusammengeführt werden und der resultierende Druck gemessen wird. Wenn also nicht für jedes Einzelgas bzw. Mischgas der Druck gemessen wird, läßt sich damit der Geräteaufwand reduzieren.

Günstigerweise wird der Volumenstrom eines Gasgemisches geregelt, indem die Volumenströme der Einzelgase oder einzelnen Mischgase des Gasgemisches geregelt werden.

Insbesondere kann dabei vorgesehen sein, daß die Volumenstromregelung des Sekundärgases bzw. Sekundärmischgases bzw. Sekundärgasgemisches in Kombination mit einer Druckregelung des Sekundärgases bzw. Sekundärmischgases bzw. Sekundärgasgemisches durchgeführt derart, daß mittels der Druckregelung der Betrag des Gesamtvolumenstroms des Sekundärgases bzw. Sekundärmischgases bzw. Sekundärgasgemisches durch die Sekundärgasdüse des Plasmabrenners geregelt wird und mittels der Volumenstromregelung die den Gesamtvolumenstrom ergebenden Volumenstromanteile unter Berücksichtigung der gewünschten Sekundärgaszusammensetzung geregelt werden.

Vorteilhafterweise Verfahren wird der Plasmabrenner vor der Versorgung mit dem Gas bzw. Mischgas bzw. Gasgemisch mit einem Vorströmgas mit Druckregelung und/oder nach der Versorgung mit dem Gas bzw. Mischgas bzw. Gasgemisch mit einem Nachströmgas mit Druckregelung separat versorgt wird.

Schließlich kann bei dem Verfahren vorgesehen sein, daß das Gas, Mischgas oder Gasgemisch ein Plasmagas, Plasmamischgas oder Plasmagasgemisch ist.

Die Unteransprüche betreffen vorteilhafte Ausführungsformen der erfindungsgemäßen Anordnung.

Der Erfindung liegt die überraschende Erkenntnis zugrunde, daß durch Kombination von Volumenstromregelung und Druckregelung in der beanspruchten Weise der tatsächlich durch die Plasmabrennerdüse gehende Volumenstrom geregelt werden kann. Wie nämlich Untersuchungen ergeben haben, ist für die Schnittqualität letztlich der Volumenstrom, der tatsächlich durch die Plasmabrennerdüse des Plasmabrenners geht, und nicht der durch die Volumenstromregler strömende Gasvolumenstrom entscheidend. Gasschläuche, die den Plasmabrenner mit den Volumenstromreglern verbinden, führen jedoch dazu, daß der Volumenstrom durch die Volumenstromregler nicht mit dem tatsächlich durch die Plasmabrennerdüse gehenden Volumenstrom identisch ist. Ursache für die Differenz zwischen dem Volumenstrom in den Volumenstromreglern und der Plasmabrennerdüse sind das Volumen der sich dazwischen befindenden Gasschläuche und die Kompressibilität von Gasen.

Dies macht sich insbesondere bei Übergängen zwischen den beim Plasmaschneiden auftretenden unterschiedlichen Betriebszuständen bemerkbar. Im Innenraum des Plasmabrenners (zwischen Elektrode und Plasmabrennerdüse) werden nämlich in Abhängigkeit vom jeweiligen Betriebszustand, wie Prozeßstart, Pilotlichtbogen, Hauptlichtbogen und Prozeßende unterschiedliche Innendrücke benötigt, um einen bestimmten Volumenstrom zu realisieren. Diese werden durch die veränderlichen Lichtbogenströme, die einen unterschiedlichen Durchmesser des Plasmastrahls erzeugen und somit den Düsenkanal verengen, erzeugt. So betragen die Ströme bei Pilotlichtbogen beispielsweise 10 - 25 A und beim Hauptlichbogen 20 -1000 A.

Mit der vorliegenden Erfindung kann auf schnell veränderliche Druckverhältnisse im Innenraum des Plasmabrenners, insbesondere während der Übergangsvorgänge, wie zum Beispiel Zünden des Pilotbogens, Übersetzend des Pilotbogens zum Werkstück und Ausbilden des Hauptbogens (Schneiden) reagiert werden, ohne das Mischungsverhältnis des Gasgemisches zu verändern. Dies gelingt dadurch, daß das Ergebnis der Druckmessung dem Sollwert der Volumenstromregeleinrichtung derart überlagert wird, daß ein vom Betriebszustand des Plasmabrenners unabhängiger Druck im Raum zwischen den Volumenstromregeleinrichtungen und dem Plasmabrenner bzw. im Innenraum des Plasmabrenners realisiert wird und das Mischungsverhältnis des Gasgemisches unverändert bleibt. Damit steht ein optimales Plasmagasgemisch von Beginn an dem Schneidprozeß zur Verfügung.

Sowohl Einzelgase an sich als auch die Einzelgase für Gasgemische können in großen Bereichen geregelt und damit der Schneidaufgabe optimal angepaßt werden. So wird eine große Reproduzierbarkeit der Schnittergebnisse erreicht.

Die Stellung des Volumenstromes kann beispielsweise mit Hilfe von Proportionalventilen oder Motorventilen erfolgen. Die Messung des Drucks kann mit Hilfe an sich bekannter Drucktransmitter erfolgen.

Die Volumenstrom- und Druckregelung können analog oder digital und entsprechend ansteuerbar sein. Der gemessene Volumenstrom kann visualisiert und überwacht werden.

Das erfindungsgemäße Verfahren kann in ein Qualitätssicherungs- und Dokumentationssystem eingebunden werden. In Auswertung mit anderen Prozeßpararnetern können Rückschlüsse auf die Schneidqualität gezogen werden.

Weitere Merkmale und Vorteile der Erfindung ergeben sich aus den Ansprüchen und aus der nachstehenden Beschreibung, in der zwei Ausführungsbeispiele anhand der schematischen Zeichnungen im einzelnen erläutert sind. Dabei zeigt:

Figur 1,    schematisch eine Anordnung zur Versorgung eines als Plasmaschneidbrenner ausgeführten Plasmabrenners mit einem Plasmagasgemisch und einem Sekundärgasgemisch gemäß einer besonderen Ausführungsform der Erfindung;

Figur 2    eine Anordnung zur Versorgung eines als Plasmaschneidbrenner ausgeführten Plasmabrenners mit Plasmagasgemisch und Sekundärgasgemisch gemäß einer weiteren besonderen Ausführungsform der Erfindung;

Figur 3    schematisch eine Anordnung zur Versorgung eines als Plasmaschneidbrenner ausgeführten Plasmabrenners mit einem Sekundärgasgemisch gemäß einer weiteren besonderen Ausführungsform der Erfindung; und

Figur 4    ein Detail von Figur 1.

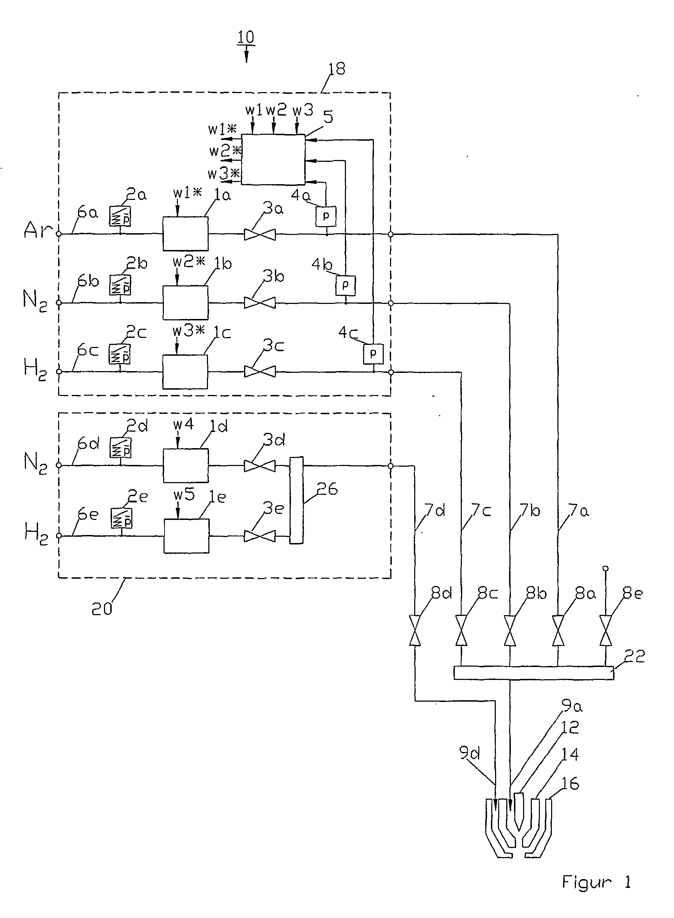

Die Figur 1 zeigt eine Anordnung 10 zur Versorgung eines als Plasmaschneidbrenner ausgeführten Plasmabrenners, von dem nur eine Elektrode 12, eine Plasmabrennerdüse 14 und eine Sekundärgasdüse 16 gezeigt sind, mit einem Argon/Wasserstoff/Stickstoff-Gemisch zum Plasmaschneiden legierter Stähle und Nichteisenmetalle. Sie umfaßt eine Einrichtung 18 zur Zuführung eines Plasmagasgemisches, die für jedes Einzelgas, nämlich Argon (Ar), Wasserstoff ($H_2$) und Stickstoff ($N_2$), des Plasmagasgemisches (Argon/Wasserstoff/StickstoffGemisch) eine Einzelgasquelle (nicht gezeigt) aufweist, die über eine jeweilige Schlauchleitung 6a, 6b, 6c mit einer Plasmagasmischeinrichtung 22 verbunden ist. Die Plasmagasmischeinrichtung steht über einen Plasmagasgemischschlauch 9a mit der Plasmabrennerdüse 14 in Verbindung.

Weiterhin ist eine Einrichtung 20 zur Zuführung eines Sekundärgasgemisches vorgesehen. Diese umfaßt Quellen (nicht gezeigt) für die Einzelgase, das heißt in diesem Fall $N_2$ und $H_2$, des Sekundärgases, die über jeweilige Schlauchleitungen 6d und 6e mit einer Sekundärgasmischeinrichtung 26 in Verbindung stehen, die über eine Schlauchleitung 7d und einen Sekundärgasgemischschlauch 9d mit der Sekundärgasdüse 16 in Verbindung steht.

In jeder Schlauchleitung 6a, 6b und 6c sowie 6d und 6e sind jeweils ein Druckschalter 2a, 2b, 2c, 2d bzw. 2e und eine Volumenstromregeleinrichtung 1a, 1b, 1c, 1d bzw. 1e und ein Magnetventil 3a, 3b, 3c, 3d bzw. 3e in Reihe hintereinander vorgesehen.

In der Einrichtung 18 zur Zuführung eines Plasmagasgemisches ist darüber hinaus dem jeweiligen Magnetventil 3a, 3b bzw. 3c eine Druckmeßeinrichtung 4a, 4b bzw. 4c nachgeschaltet. Die Druckmeßeinrichtungen 4a, 4b und 4c stehen über Signalleitungen mit einer Steuereinrichtung 5 in Verbindung, die wiederum über eine jeweilige Steuerleitung mit den Volumenstromregeleinrichtungen 1a, 1b und 1c in Verbindung steht.

Hinter den Druckmeßeinrichtungen 4a, 4b und 4c sind in den Schlauchleitungen 7a, 7b und 7c jeweilige Magnetventile 8a, 8b und 8c angeordnet. Hinter den Magnetventilen 8a, 8b und 8c werden die Schlauchleitungen 7a, 7b und 7c zum Plasmagasgemischschlauch 9a zusammengeführt.

In der Einrichtung 20 zur Zuführung eines Sekundärgasgemisches sind die Schlauchleitungen 6d und 6e hinter den Magnetventilen 3d und 3e über die Sekundärgasmischeinrichtung 26 zur Schlauchleitung 7d zusammengeführt. Dahinter ist auf der Seite des Plasmabrenners ein Magnetventil 8d angeordnet.

Nachfolgend wird der Betrieb der Anordnung 10 von Figur 1 erläutert:

Die Einzelgase für das Plasmagas, im vorliegenden Fall Argon, Stickstoff und Wasserstoff werden den Volumenstromregeleinrichtungen 1a, 1b und 1c über die Schlauchleitungen 6a, 6b und 6c zugeführt. Die Druckschalter 2a, 2b und 2c überwachen das Vorhandensein eines minimal benötigten Gasdrucks. Einzelne Volumenstromsollwerte w1, w2, w3 werden von der Steuereinrichtung 5 entsprechend den gewählten Parametern den jeweiligen Volumenstromregeleinrichtungen 1a, 1b und 1c übermittelt. Vor Beginn des Plasmaschneidprozesses werden die Magnetventile 3a, 3b und 3c und zunächst auch die Magnetventile 8a, 8b und 8c geöffnet, um die Schlauchleitungen 6a, 6b und 6c zu spülen. Danach werden die Schlauchleitungen 6a, 6b und 6c durch die Volumenstromregeleinrichtungen 1a, 1b und 1c auf den von der Steuereinrichtung 5 vorgegebenen Druck, der durch die Druckmeßeinrichtungen 4a, 4b und 4c ermittelt wird, gefüllt. Dies geschieht bei geschlossenen Magnetventilen 8a, 8b und 8c, damit sich der Druck aufbauen kann. Vorteilhafterweise findet die Befüllung der Schlauchleitungen 6a, 6b und 6c mit demselben Druck, beispielsweise 4 bar, statt, damit zu Beginn des Plasmaschneidprozesses keine Ausgleichsvorgänge zwischen den Einzelgasen stattfinden.

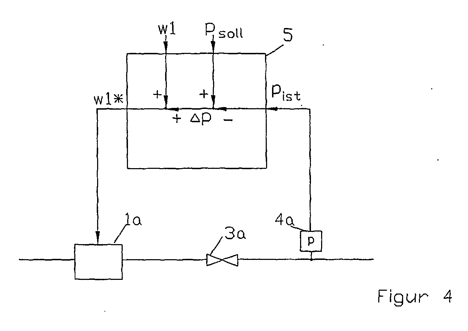

Zu Beginn des Plasmaschneidprozesses werden die Magnetventile 3a, 3b, 3c und 8a, 8b sowie 8c geöffnet und werden die entsprechenden Volumenströme der Einzelgase und damit der Gesamtvolumenstrom des Plasmagasgemisches eingestellt. Dabei wird der Druck einer Druckmeßeinrichtung, zum Beispiel 4a, von der Steuerung 5 ausgewertet, da bei geöffneten Magnetventilen 8a, 8b und 8c ein Raum entstanden ist, in dem alle Schlauchleitungen 6a, 6b und 6c miteinander verbunden sind. Es ist auch möglich, alle Druckmeßeinrichtungen 4a, 4b und 4c auszuwerten und dann beispielsweise einen mittleren Druck anhand der gemessenen Drücke zu bilden. In der Vorströmzeit, das heißt unmittelbar vor Zünden des Pilotbogens, strömt dann eine definiertes Plasmagasgemisch mit einem vorgewählten Druck, zum Beispiel 4 bar, durch den Plasmabrenner. Der resultierende Druck wird der Steuereinrichtung 5 zugeführt und so verarbeitet, daß die gewählten Volumenstromsollwerte w1, w2 und w3 zu neuen Volumenstromsollwerten w1*, w2* und w3* gewandelt werden, die den gewünschten Druck im Innenraum des Plasmabrenners bei konstanter Gasmischung zwischen den Volumenstromregeleinrichtungen 1a, 1b und 1c und Plasmabrenner einstellen. Nach Zünden des Pilotbogens wird der Druck auf den für den Plasmaschneidprozeß benötigten Druck, zum Beispiel 6 bar, erhöht. Dies geschieht durch Anheben des Drucksollwertes $p_{soll}$ (siehe Figur 4) in der Steuereinrichtung 5, wobei der erhöhte Drucksollwert $p_{soll}$ die Volumenströme der Einzelgase entsprechend erhöht. So wird realisiert, daß immer der gewünschte Druck in dem Innenraum des Plasmabrenners und das gewünschte Plasmagasmischungsverhältnis anliegen.

Auch Druckschwankungen vor dem Plasmabrenner während der Betriebszustände werden ausgeglichen, zum Beispiel bei Stromabsenkung beim Schneiden einer Ecke oder am Ende eines Schnitts.

Mit den Volumenstromsollwerten w1, w2 und w3 werden die Volumenströme der Einzelgase und damit das Mischungsverhältnis gewählt. Der Druck vor dem Plasmabrenner bestimmt den Druck im Innenraum des Plasmabrenners zwischen der Elektrode 12 und der Plasmabrennerdüse 14 und damit auch den Volumenstrom, der letztlich durch die Plasmabrennerdüse 14 fließt. Der durch die eingestellten Volumenströme erreichte Druck wird mittels der Druckeinrichtung 4a als Druckistwert $p_{ist}$ gemessen und der Steuereinrichtung 5 zugeführt. Stimmt dieser Druckistwert $p_{ist}$ nicht mit dem gewählten Drucksollwert $p_{soll}$ überein, das heißt, reichen die Volumenströme durch die Volumenstromregeleinrichtungen 1a, 1b und 1c nicht aus, um den Drucksollwert $p_{soll}$ zu erreichen, wird die Druckdifferenz $\Delta p = p_{soll} - p_{ist}$ ermittelt und mit einem Faktor k multipliziert zum Volumenstromsollwert w1, w2 bzw. w3 der Volumenstromregeleinrichtungen 1a, 1b und 1c addiert. Dies wird durch die nachfolgende Gleichung wiedergegeben:

$$w^* = w + k \times \Delta p.$$

Dadurch ergeben sich die bearbeiteten Volumenstromsollwerte w1*, w2* und w3*. Ist der Druckistwert $p_{ist}$ größer als der Drucksollwert $p_{soll}$, so ist $\Delta p$ negativ (siehe Figur 4). Dadurch verringern sich die Volumenstromsollwerte für die Volumenstromregeleinrichtungen 1a, 1b und 1c. Die einstellbaren Volumenströme, Gasgemische und Drücke lassen sich auf einem Bedienfeld durch Software auf sinnvolle und sichere Werte begrenzen.

Mit der vorangehend beschriebenen Anordnung ist selbstverständlich auch die Regelung von Einzelgasen, sowohl von oxidierenden, wie zum Beispiel Luft, Sauerstoff, und nichtoxidierenden, wie Argon, Wasserstoff, Stickstoff oder deren Gemische möglich.

Es besteht die Möglichkeit, mit dem Plasmabrenner mit Luft und Sauerstoff unlegierten Stahl und mit einem Argon-Wasserstoff Stickstoff Gemisch legierte Stähle zu schneiden.

Weiterhin besteht die Möglichkeit, mit dieser Anordnung ein Plasmaschneid- und Plasmamarkierverfahren durchzuführen. Beim Wechsel zwischen vorgenannten Verfahren muß zwischen unterschiedlichen Plasmagasen umgeschaltet werden. So wird beispielsweise beim Plasmaschneiden von Baustahl Sauerstoff und beim Plasmamarkieren ein Argon-Stickstoff-Gemisch verwendet. Der Plasmagaswechsel soll dabei wegen hoher Produh-tivität schnell erfolgen. Es muß jedoch sichergestellt werden, daß ein vollständiger Plasmagasaustausch stattgefunden hat. Deshalb müssen die Schlauchleitungen 6a, 6b und 6c entlüftet und mit dem neuen Plasmagasgemisch gespült und gefüllt werden. Da die Plasmabrennerdüse 14 oftmals eine sehr kleine Bohrung aufweist (zum Beispiel mit einem Durchmesser von 0,7 mm), kann dieser Vorgang relativ lange, in Abhängigkeit von der Länge der Schlauchleitungen beispielsweise 10 Sekunden und länger dauern. Zur Verkürzung der Zeit ist ein Magnetventil 8e vorgesehen, das die Gasschläuche 7a, 7b und 7c bei geöffneten Magnetventile 8a, 8b oder 8c schnell entlüftet. Dadurch kann die Zeit auf unter 3 Sekunden reduziert werden.

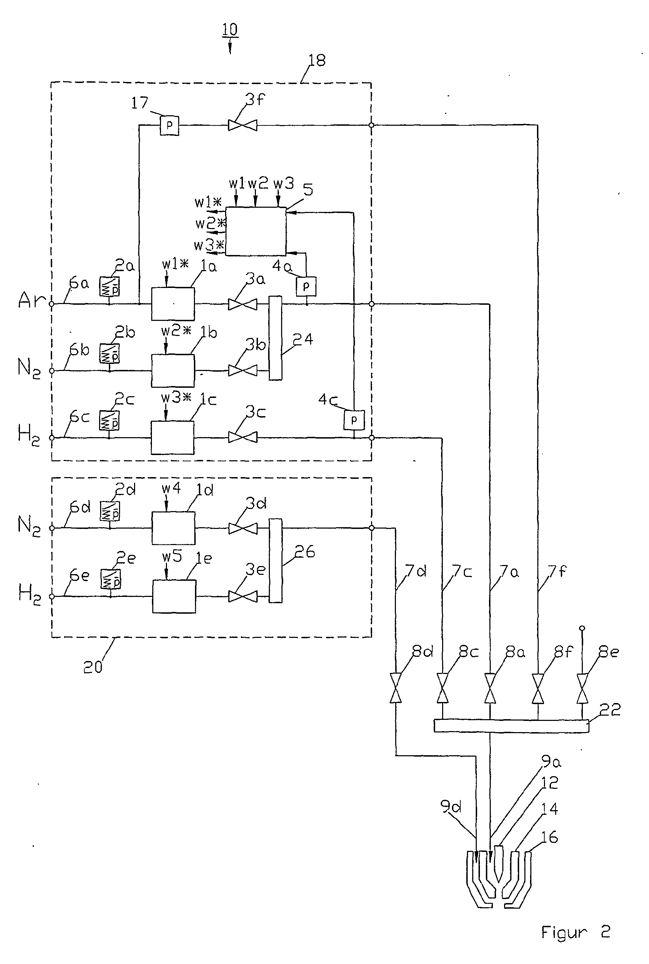

Figur 2 zeigt eine Anordnung 10, die sich von der Anordnung von Figur 1 durch eine kombinierte Vorströmgas- und Nachströmgaszuführeinriehtung, umfassend ein Magnetventil 3f, eine Schlauchleitung 7f und ein Magnetventil 8f, zur separaten Zuführung eines Vorström- und eines Nachströmgases zum Plasmabrenner und durch eine Druckregeleinrichtung 17 zur Regelung des Druckes des Vorström- und des Nachströmgases unterscheidet. Weiterhin unterscheidet sich die Anordnung 10 von Figur 2 von der Anordnung von Figur 1 darin, daß die Plasmagase Argon und Stickstoff schon in der Einrichtung 18 zur Zuführung eines Plasmagasgemisches in einer Plasmagasmischeinrichtung 24 gemischt werden.

Der Vorteil der Anordnung 10 von Figur 2 besteht darin, daß das Vorströmgas mit einem anderen Druck, zum Beispiel 4 bar, durch den Plasmabrenner strömen kann, während die zum Plasmaschneiden benötigten Gase bereits mit dem zum Plasmaschneiden benötigten Druck, zum Beispiel 6 bar, vor Plasmaschneidbeginn bis zu den Magnetventilen 8a und 8c anliegen. Damit entfällt die in Figur 1 noch benötigte Umschaltung des Drucks von 4 bar auf 6 bar bei Zündung des Pilotbogens. Während des Vorströmens sind die Magnetventile 3a, 3b, 3c und 3f sowie das Magnetventil 8f geöffnet. Die Schlauchleitungen 7a und 7c werden durch die Volumenstromregeleinrichtungen 1a und 1c bis auf den von der Steuereinrichtung 5 vorgegebenen Druck, der durch die Druckmeßeinrichtungen 4a und 4c ermittelt wird, gefüllt. Dabei sind die Magnetventile 8a und 8c des Plasmabrenners geschlossen, damit sich der Druck von beispielsweise 6 bar aufbauen kann.

Nach Zünden des Pilotbogens werden die Magnetventile 8a und 8c geöffnet und die Magnetventile 3f und 8f geschlossen. Auch hier werden durch die Verarbeitung der Druckmeßwerte der Druckmeßeinrichtung 4a in der Steuereinrichtung 5 die Volumenströme der Einzelgase so beeinflußt, daß immer der gewünschte Druck und das gewünschte Plasmagasmischungsverhältnis am Plasmabrenner anliegen. Nach Beendigung des Plasmaschneidens werden die Magnetventile 8a und 8c wieder geschlossen und die Magnetventile 3f und 8f geöffnet. Dadurch kann nachfolgend Nachströmgas zugeführt werden.

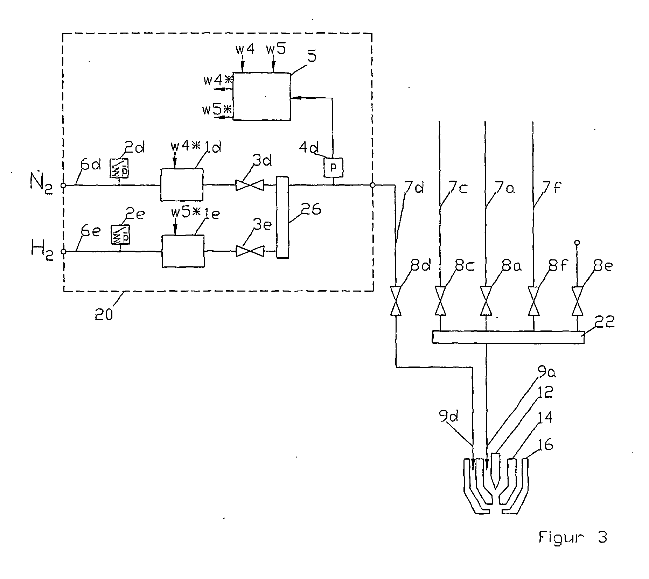

In den Figuren 1 und 2 wird das Sekundärgas nur durch die Volumenstromregeleinrichtungen 1d und 1e geregelt, die während des gesamten Plasmaschneidprozesses den Sekundärgasvolumenstrom bei geöffneten Magnetventilen 3d, 3e und 8d konstant halten. Bei Plasmabrennern, die so konstruiert sind, daß sich die Bohrung der Sekundärgasdüse 16 durch einen Plasmastrahl nicht wesentlich verengt, reicht dies aus. Dies trifft für Plasmabrenner zu, deren Bohrung der Sekundärgasdüse 16 mindestens doppelt so groß ist wie die Plasmabrennerdüse 14. Für kleinere Durchmesserverhältnisse ist für die Versorgung mit Sekundärgas das gleiche Verfahren wie bei der Versorgung mit Plasmagas anzuwenden. Dies ist in Figur 3 dargestellt. Es wird also eine kombinierte Volumenstrom- und Druckregelung des Sekundärgases analog zur Volumenstrom- und Druckregelung der Versorgung mit Plasmagas gemäß den Figuren 1 und 2 durchgeführt.

Das Verfahren zur Versorgung mit Gas ist prinzipiell auch für das Plasmatechnologien, wie beispielsweise Plasmaschweißen, Plasmafugen, Plasmamarkieren geeignet.

In den beschriebenen Ausführungsformen ist der Druck in dem Innenraum des Plasmabrenners indirekt über die Druckmeßeinrichtungen 4a, 4b und 4c gemessen geworden. Selbstverständlich könnte alternativ eine Druckmeßeinrichtung zur direkten Messung des Druckes im Innenraum des Plasmabrenners vorgesehen sein.

Bezugszeichenliste

| | |
|---|---|
| 1a, 1b, 1c, 1d, 1e | Volumenstromregeleinrichtungen |
| 2a, 2b, 2c, 2d, 2e | Druckschalter |
| 3a, 3b, 3c, 3d, 3e, 3f | Magnetventile |
| 4a, 4b, 4c | Druclmießeinrichtungen |
| 5 | Steuereinrichtung |
| 6a, 6b, 6c, 6d, 6e | Schlauchleitungen |
| 7a, 7b, 7c | Schlauchleitungen |
| 7f | Schlauchleitung |
| 8a, 8b, 8c | Magnetventile |
| 8d, 8f | Magnetventil |
| 9a | Plasmagasgemischschlauch |
| 9d | Sekundärgasgemischschlauch |
| 10 | Anordnung |
| 12 | Elektrode |
| 14 | Plasmabrennerdüse |
| 16 | Sekundärgasdüse |
| 17 | Druckregeleinrichtung |
| 18 | Einrichtung zur Zuführung eines Plasmagasgemisches |
| 20 | Einrichtung zur Zuführung eines Sekundärgasgemisches |
| 22 | Plasmagasmischeinrichtung |
| 24 | Plasmagasmischeinrichtung |
| 26 | Sekundärgasmischeinrichtung |
| k | Faktor |
| w1, w2, w3 | neue Volumenstromsollwerte |
| w1*, w2*, w3* | Volumenstromsollwerte |
| $p_{soll}$ | Drucksollwert |
| $p_{ist}$ | Druckistwert |

**Patentansprüche**

1. Verfahren zur Versorgung eines Plasmabrenners mit einem Gas, Mischgas oder Gasgemisch, bei dem eine Volumenstromregelung des Gases bzw. Mischgases bzw. Gasgemisches durchgeführt wird, wobei das Verfahren umfasst:

   Bestimmen einer gewünschten Gaszusammensetzung, die einem Plasmabrenner zugeführt werden soll, und Zuführen eines Volumens mit der gewünschten Gaszusammensetzung von mindestens einer Gasquelle zum Plasmabrenner,

   **dadurch gekennzeichnet dass** zum Regeln des durch die Plasmabrennerdüse (14) des Plasmabrenners gehenden Volumenstroms die Volumenstromregelung des Gases bzw. Mischgases bzw. Gasgemisches zum Plasmabrenner durch Verwendung von Druckregelung zum Einstellen des Betrags des Gesamtvolumenstroms durch die Plasmabrennerdüse (14) des Plasmabrenners und durch Verwendung von Volumenstromregelung zum Einstellen der den Gesamtvolumenstrom ergebenden Volumenstromanteile unter Berücksichtigung der gewünschten Gaszusammensetzung durchgeführt wird und mindestens ein Volumenstrom auf der Basis der kalorimetrischen Messung des Volumenstroms, auf der Basis der Messung des Volumenstroms aus dem Differenzdruck oder auf der Basis einer Impulsmessung geregelt wird.

2. Verfahren nach Anspruch 1, **dadurch gekennzeichnet, dass** der Druck im Innenraum des Plasmabrenners zwischen der Elektrode (12) und der Plasmabrennerdüse (14) des Plasmabrenners direkt oder indirekt gemessen wird.

3. Verfahren nach Anspruch 2, **dadurch gekennzeichnet, dass** der Druck in Gaszuführungsrichtung vor dem Plasmabrenner gemessen wird.

4. Verfahren nach Anspruch 2 oder 3, **dadurch gekennzeichnet, dass** die Volumenstromregelung mittels einer Volumenstromregeleinrichtung (1a oder 1b oder 1c oder 1d oder 1e) bzw. mittels Volumenstromregeleinrichtungen (1a, 1b, 1c, 1d, 1e) durchgeführt wird und der Druck zwischen der bzw. den Volumenstromregeleinrichtung(en) (1a, 1b, 1e, 1d, 1e) und dem Plasmabrenner gemessen wird.

5. Verfahren nach Anspruch 4, **dadurch gekennzeichnet, dass** die Drücke der Einzelgase oder einzelnen Mischgase gemessen werden und ein mittlerer Druck aus den gemessenen Drücken gebildet wird.

6. Verfahren nach Anspruch 4, **dadurch gekennzeichnet, dass** die Einzelgase oder einzelnen Mischgase zusammengeführt werden und der resultierende Druck gemessen wird.

7. Verfahren nach Anspruch 4, **dadurch gekennzeichnet, dass** mindestens zwei Einzelgase oder Mischgase zusammengeführt werden und der resultierende Druck gemessen wird.

8. Verfahren nach einem der vorangehenden Ansprüche, **dadurch gekennzeichnet, dass** der Volumenstrom eines Gasgemisches geregelt wird, indem die Volumenströme der Einzelgase oder einzelnen Mischgase des Gasgemisches geregelt werden.

9. Verfahren nach einem der vorangehenden Ansprüche, **dadurch gekennzeichnet, dass** der Plasmabrenner zusätzlich mit Sekundärgas oder Sekundärmischgas oder Sekundärgasgemisch versorgt wird und der Volumenstrom des Sekundärgases oder Sekundärmischgases oder Sekundärgasgemisches geregelt wird.

10. Verfahren nach Anspruch 9, **dadurch gekennzeichnet, dass** die Volumenstromregelung des Sekundärgases bzw. Sekundärmischgases bzw. Sekundärgasgemisches in Kombination mit einer Druckregelung des Sekundärgases bzw. Sekundärmischgases bzw. Sekundärgasgemisches durchgeführt derart, dass mittels der Druckregelung der Betrag des Gesamtvolumenstroms des Sekundärgases bzw. Sekundärmischgases bzw. Sekundärgasgemisches durch die Sekundärgasdüse (16) des Plasmabrenners geregelt wird und mittels der Volumenstromregelung die den Gesamtvolumenstrom ergebenden Volumenstromanteile unter Berücksichtigung der gewünschten Sekundärgaszusammensetzung geregelt werden.

11. Verfahren nach einem der vorangehenden Ansprüche, **dadurch gekennzeichnet, dass** der Plasmabrenner vor der Versorgung mit dem Gas bzw. Mischgas bzw. Gasgemisch mit einem Vorströmgas mit Druckregelung separat versorgt wird und/oder nach der Versorgung mit dem Gas bzw. Mischgas bzw. Gasgemisch mit einem Nachströmgas mit Druckregelung separat versorgt wird.

12. Verfahren nach einem der vorangehenden Ansprüche, **dadurch gekennzeichnet, dass** das Gas, Mischgas oder Gasgemisch ein Plasmagas, Plasmamischgas oder Plasmagasgemisch ist.

13. Anordnung (10) zur Versorgung eines Plasmabrenners mit einem Gas oder Mischgas oder Gasgemisch mit einer Einrichtung (18) zur Zuführung eines Volumens eines Gases oder Mischgases oder Gasgemisches mit einer gewünschten Gaszusammensetzung zum Plasmabrenner, und einer Volumenstromregeleinrichtung zur Regelung des Volumenstromes des Gases oder Mischgases oder Gasgemisches,
**dadurch gekennzeichnet,**
**dass** zum Regeln des durch die Plasmabrennerdüse (14) des Plasmabrenners gehenden Volumenstroms die Volumenstromregeleinrichtung mit einer Druckregeleinrichtung zur Regelung des Druckes des Gases bzw. Mischgases bzw. Gasgemisches derart kombiniert ist, dass mittels der Druckregeleinrichtung der Betrag des Gesamtvolumenstroms durch die Plasmabrennerdüse (14) des Plasmabrenners geregelt wird und mittels Volumenstromregelung die den Gesamtvolumenstrom ergebenden Volumenstromanteile unter Berücksichtigung der gewünschten Gaszusammensetzung geregelt werden, wobei die Volumenstromregelung mindestens einen Volumenstrom auf der Basis der kalorimetrischen Messung des Volumenstroms, auf der Basis der Messung des Volumenstroms aus dem Differenzdruck oder auf der Basis einer Impulsmessung regelt.

14. Anordnung (10) nach Anspruch 13, **dadurch gekennzeichnet, dass** eine Druckmesseinrichtung zur direkten oder indirekten Messung des Druckes im Innenraum des Plasmabrenners zwischen der Elektrode (12) und der Plasmabrennerdüse (14) des Plasmabrenners vorgesehen ist.

15. Anordnung (10) nach Anspruch 14, **dadurch gekennzeichnet, dass** die Druckmesseinrichtung eine Druckmesseinrichtung (4a, 4b, 4c) für jedes Einzelgas oder Mischgas umfasst.

16. Anordnung (10) nach Anspruch 14, **dadurch gekennzeichnet, dass** die Druckmesseinrichtung eine einzige Druckmesseinrichtung (4a) zur Messung des Druckes der zusammengeführten Einzelgase oder Mischgase umfasst.

17. Anordnung (10) nach Anspruch 14, **dadurch gekennzeichnet**, umfasst die Druckmesseinrichtung mindestens eine Druckmesseinrichtung (4a) zur Messung des Druckes von mindestens zwei zusammengeführten Einzelgasen oder Mischgasen umfasst.

18. Anordnung (10) nach einem der Ansprüche 13 bis 17, **dadurch gekennzeichnet**, umfasst die Volumenstromregeleinrichtung zur Regelung des Volumenstromes eines Gasgemisches eine Volumenstromregeleinrichtung (1a, 1b, 1c) für jedes Einzelgas oder Mischgas des Gasgemisches umfasst.

19. Anordnung (10) nach einem der Ansprüche 13 bis 18, **dadurch gekennzeichnet, dass** zusätzlich eine Einrichtung (20) zur Zuführung eines Sekundärgases bzw. Sekundärmischgases bzw. Sekundärgasgemisches zum Plasmabrenner und eine Sekundärgas Volumenstromregeleinrichtung zur Regelung des Volumenstromes des Sekundärgases oder Sekundärmischgases oder Sekundärgasgemisches vorgesehen ist.

20. Anordnung (10) nach Anspruch 19, **dadurch gekennzeichnet, dass** die Sekundärgasvolumenstromregeleinrichtung mit einer Sekundärgasdruckregeleinrichtung zur Regelung des Druckes des Sekundärgases bzw. Sekundärmischgases bzw. Sekundärgasgemisches derart kombiniert ist, dass mittels der Druckregeleinrichtung der Betrag des Gesamtvolumenstroms durch die Sekundärgasdüse (16) des Plasmabrenners geregelt wird und mittels der Volumenstromregeleinrichtung die den Gesamtvolumenstrom ergebenden Volumenstromanteile unter Berücksichtigung der gewünschten Sekundärgaszusammensetzung geregelt werden.

21. Anordnung (10) nach einem der Ansprüche 13 bis 20, **dadurch gekennzeichnet, dass** zusätzlich eine Vorströmgaszuführeinrichtung zur separaten Zuführung eines Vorströmgases zum Plasmabrenner und eine Druckregeleinrichtung (17) zur Regelung des Druckes des Vorströmgases vorgesehen sind und/oder eine Nachströmeinrichtung zur separaten Zuführung eines Nachströmgases zum Plasmabrenner und eine Druckregeleinrichtung (17) zur Regelung des Druckes des Nachströmgases vorgesehen sind.

22. Anordnung (10) nach einem der Ansprüche 13 bis 21, **dadurch gekennzeichnet, dass** das Gas ein Plasmagas, das Mischgas ein Plasmamischgas und das Gasgemisch ein Plasmagasgemisch ist.

**Claims**

1. Method for supplying a plasma torch with a gas, mixed gas, or gas mixture, according to which the volumetric flow of the gas, mixed gas, or gas mixture is regulated, the method comprising:

   determining a desired gas composition which is to be supplied to a plasma torch, and
   supplying a volume with the desired gas composition from at least one gas source to the plasma torch,

   **characterised in that** in order to regulate the volumetric flow passing through the plasma torch nozzle (14) of the plasma torch, the volumetric flow of the gas, mixed gas, or gas mixture to the plasma torch is regulated by regulating the pressure to set the amount of the total volumetric flow through the plasma torch nozzle (14) of the plasma torch and by regulating the volumetric flow to set the volumetric flow portions resulting in the total volumetric flow, taking into account the desired gas composition, and at least one volumetric flow is regulated on the basis of calorimetric measurement of the volumetric flow, on the basis of measurement of the volumetric flow from the differential pressure or on the basis of a pulse measurement.

2. Method according to claim 1, **characterised in that** the pressure in the interior of the plasma torch is measured directly or indirectly between the electrode (12) and the plasma torch nozzle (14) of the plasma torch.

3. Method according to claim 2, **characterised in that** the pressure is measured in the gas supply direction upstream of the plasma torch.

4. Method according to claim 2 or 3, **characterised in that** the volumetric flow is regulated by means of a volumetric flow regulating device (1a or 1b or 1c or 1d or 1e) or by means of volumetric flow devices (1a, 1b, 1c, 1d, 1e) and the pressure is measured between the volumetric flow regulating device(s) (1a, 1b, 1c, 1d, 1e) and the plasma torch.

**5.** Method according to claim 4, **characterised in that** the pressures of the individual gases or individual mixed gases are measured and an average pressure is formed from the measured pressures.

**6.** Method according to claim 4, **characterised in that** the individual gases or individual mixed gases are combined and the resulting pressure is measured.

**7.** Method according to claim 4, **characterised in that** at least two individual gases or mixed gases are combined and the resulting pressure is measured.

**8.** Method according to one of the preceding claims, **characterised in that** the volumetric flow of a gas mixture is regulated by regulating the volumetric flows of the individual gases or individual mixed gases of the gas mixture.

**9.** Method according to one of the preceding claims, **characterised in that** the plasma torch is supplied with an additional secondary gas or secondary mixed gas or secondary gas mixture and the volumetric flow of the secondary gas or secondary mixed gas or secondary gas mixture is regulated.

**10.** Method according to claim 9, **characterised in that** the volumetric flow of the secondary gas, secondary mixed gas, or secondary gas mixture is regulated in combination with pressure regulation of the secondary gas, secondary mixed gas, or secondary gas mixture in such a way that the amount of the total volumetric flow of the secondary gas, secondary mixed gas, or secondary gas mixture through the secondary gas nozzle (16) of the plasma torch is regulated by regulating the pressure and the volumetric flow portions resulting in the total volumetric flow are regulated, taking into account the desired secondary gas composition, by regulating the volumetric flow.

**11.** Method according to one of the preceding claims, **characterised in that** the plasma torch, before being supplied with the gas, mixed gas, or gas mixture, is separately supplied with a pre-flow gas at a controlled pressure and/or after being supplied with the gas, mixed gas, or gas mixture is separately supplied with a post-flow gas at a controlled pressure.

**12.** Method according to one of the preceding claims, **characterised in that** the gas, mixed gas, or gas mixture is a plasma gas, plasma mixed gas, or plasma gas mixture.

**13.** Arrangement (10) for supplying a plasma torch with gas or mixed gas, or gas mixture with a device (18) for supplying a volume of a gas or mixed gas, or gas mixture with a desired gas composition to the plasma torch and a volumetric flow regulating device to regulate the volumetric flow of the gas or mixed gas, or gas mixture,
**characterised in that**
in order to regulate the volumetric flow passing through the plasma torch nozzle (14) of the plasma torch, the volumetric flow regulating device is combined with a pressure regulating device for regulating the pressure of the gas, mixed gas, or gas mixture in such a way that the amount of the total volumetric flow through the plasma torch nozzle (14) of the plasma torch is regulated by means of the pressure regulating device and the volumetric flow portions resulting in the total volumetric flow, taking into account the desired gas composition, are regulated by regulating the volumetric flow, and regulating the volumetric flow regulates at least one volumetric flow on the basis of calorimetric measurement of the volumetric flow, on the basis of measurement of the volumetric flow from the differential pressure or on the basis of a pulse measurement.

**14.** Arrangement (10) according to claim 13, **characterised in that** a pressure measurement device is provided between the electrode (12) and the plasma torch nozzle (14) of the plasma torch for direct or indirect measurement of the pressure in the interior of the plasma torch.

**15.** Arrangement (10) according to claim 14, **characterised in that** the pressure measurement device comprises a pressure measurement device (4a, 4b, 4c) for each individual gas or mixed gas.

**16.** Arrangement (10) according to claim 14, **characterised in that** the pressure measurement device comprises a single pressure measurement device (4a) for measuring the pressure of the combined individual gases or mixed gases.

**17.** Arrangement (10) according to claim 14, **characterised in that** the pressure measurement device comprises at least one pressure measurement device (4a) for measuring the pressure of at least two combined individual gases or mixed gases.

18. Arrangement (10) according to one of claims 13 to 17, **characterised in that** the volumetric flow regulating device for regulating the volumetric flow of a gas mixture comprises a volumetric flow regulating device (1a, 1b, 1c) for each individual gas or mixed gas of the gas mixture.

19. Arrangement (10) according to one of claims 13 to 18, **characterised in that** an additional device (20) for supplying a secondary gas, secondary mixed gas, or secondary gas mixture to the plasma torch and a secondary gas volumetric flow regulating device for regulating the volumetric flow of the secondary gas or secondary mixed gas or secondary gas mixture is provided.

20. Arrangement (10) according to claim 19, **characterised in that** the secondary gas volumetric flow regulating device is combined with a secondary gas pressure regulating device for regulating the pressure of the secondary gas, secondary mixed gas, or secondary gas mixture in such a way that the amount of the total volumetric flow through the secondary gas nozzle (16) of the plasma torch is regulated by means of the pressure regulating device and the volumetric flow portions resulting in the total volumetric flow, taking into account the desired secondary gas composition, are regulated by means of the volumetric flow regulating device.

21. Arrangement (10) according to one of claims 13 to 20, **characterised in that** an additional pre-flow gas supply device for separately supplying a pre-flow gas to the plasma torch and a pressure regulating device (17) for regulating the pressure of the pre-flow gas are provided and/or a post-flow device for separately supplying a post-flow gas to the plasma torch and a pressure regulating device (17) for regulating the pressure of the post-flow gas are provided.

22. Arrangement (10) according to one of claims 13 to 21, **characterised in that** the gas is a plasma gas, the mixed gas is a plasma mixed gas and the gas mixture is a plasma gas mixture.

## Revendications

1. Procédé pour alimenter une torche à plasma avec un gaz, un gaz mixte ou un mélange gazeux, selon lequel on effectue une régulation du débit volumique du gaz ou gaz mixte ou mélange gazeux, le procédé comprenant :

   la détermination d'une composition gazeuse souhaitée qui doit être apportée à une torche à plasma, et l'apport à la torche à plasma, à partir d'au moins une source de gaz, d'un volume ayant la composition gazeuse souhaitée,

   **caractérisé en ce que**, pour réguler le débit volumique passant par la buse (14) de la torche à plasma, la régulation du débit volumique du gaz ou gaz mixte ou mélange gazeux apporté à la torche à plasma est effectuée en utilisant une régulation de pression pour régler la valeur du débit volumique total passant par la buse (14) de la torche à plasma, et en utilisant une régulation de débit volumique pour régler les débits volumiques partiels qui forment le débit volumique total, en tenant compte de la composition gazeuse souhaitée, et au moins un débit volumique est régulé sur la base de la mesure calorimétrique du débit volumique, sur la base de la mesure du débit volumique à partir de la pression différentielle ou sur la base d'une mesure d'impulsions.

2. Procédé selon la revendication 1, **caractérisé en ce qu'**on mesure la pression à l'intérieur de la torche à plasma directement ou indirectement entre l'électrode (12) et la buse (14) de la torche à plasma.

3. Procédé selon la revendication 2, **caractérisé en ce qu'**on mesure la pression en amont de la torche à plasma dans la direction d'alimentation du gaz.

4. Procédé selon la revendication 2 ou 3, **caractérisé en ce qu'**on effectue la régulation de débit volumique au moyen d'un équipement de régulation de débit volumique (1a ou 1b ou 1 c ou 1d ou 1e) ou au moyen d'équipements de régulation de débit volumique (1a, 1b, 1c, 1d, 1e), et on mesure la pression entre le ou les équipement(s) de régulation de débit volumique (1a, 1b, 1c, 1d, 1e) et la torche à plasma.

5. Procédé selon la revendication 4, **caractérisé en ce qu'**on mesure les pressions des gaz individuels ou des gaz mixtes individuels, et on forme une pression moyenne à partir des pressions mesurées.

6. Procédé selon la revendication 4, **caractérisé en ce qu'**on réunit les gaz individuels ou gaz mixtes individuels, et on mesure la pression résultante.

7. Procédé selon la revendication 4, **caractérisé en ce qu'**on réunit au moins deux gaz individuels ou gaz mixtes, et on mesure la pression résultante.

8. Procédé selon l'une des revendications précédentes, **caractérisé en ce que** le débit volumique d'un mélange gazeux est régulé en régulant les débits volumiques des gaz individuels ou gaz mixtes individuels du mélange gazeux.

9. Procédé selon l'une des revendications précédentes, **caractérisé en ce que** la torche à plasma est en outre alimentée en gaz secondaire ou gaz mixte secondaire ou mélange gazeux secondaire, et on régule le débit volumique du gaz secondaire ou gaz mixte secondaire ou mélange gazeux secondaire.

10. Procédé selon la revendication 9, **caractérisé en ce que** la régulation de débit volumique du gaz secondaire ou gaz mixte secondaire ou mélange gazeux secondaire est effectuée en combinaison avec une régulation de pression du gaz secondaire ou gaz mixte secondaire ou mélange gazeux secondaire, de telle sorte qu'on régule au moyen de la régulation de pression la valeur du débit volumique total du gaz secondaire ou gaz mixte secondaire ou mélange gazeux secondaire passant par la buse (16) de gaz secondaire de la torche à plasma, et qu'on régule au moyen de la régulation de débit volumique les débits volumiques partiels qui forment le débit volumique total, en tenant compte de la composition de gaz secondaire souhaitée.

11. Procédé selon l'une des revendications précédentes, **caractérisé en ce que** la torche à plasma est alimentée séparément avec un gaz de pré-flux avec régulation de pression avant l'alimentation avec le gaz ou gaz mixte ou mélange gazeux,, et/ou est alimentée séparément avec un gaz de post-flux avec régulation de pression après l'alimentation avec le gaz ou gaz mixte ou mélange gazeux.

12. Procédé selon l'une des revendications précédentes, **caractérisé en ce que** le gaz ou gaz mixte ou mélange gazeux est un gaz plasmagène, un gaz mixte plasmagène ou un mélange gazeux plasmagène.

13. Dispositif (10) pour alimenter une torche à plasma avec un gaz, un gaz mixte ou un mélange gazeux, comprenant un équipement (18) pour apporter à la torche à plasma un volume d'un gaz ou gaz mixte ou mélange gazeux ayant une composition gazeuse souhaitée, et un équipement de régulation de débit volumique pour réguler le débit volumique du gaz ou gaz mixte ou mélange gazeux,
**caractérisé en ce que**, pour réguler le débit volumique passant par la buse (14) de la torche à plasma, l'équipement de régulation de débit volumique est combiné à un équipement de régulation de pression pour réguler la pression du gaz ou gaz mixte ou mélange gazeux, de telle sorte que la valeur du débit volumique total passant par la buse (14) de la torche à plasma est régulée au moyen de l'équipement de régulation de pression et que les débits volumiques partiels qui forment le débit volumique total sont régulés par régulation de débit volumique, en tenant compte de la composition gazeuse souhaitée, sachant que la régulation de débit volumique régule au moins un débit volumique sur la base de la mesure calorimétrique du débit volumique, sur la base de la mesure du débit volumique à partir de la pression différentielle ou sur la base d'une mesure d'impulsions.

14. Dispositif (10) selon la revendication 13, **caractérisé en ce qu'**il comprend un équipement de mesure de pression pour la mesure directe ou indirecte de la pression à l'intérieur de la torche à plasma, entre l'électrode (12) et la buse (14) de la torche à plasma.

15. Dispositif (10) selon la revendication 14, **caractérisé en ce que** l'équipement de mesure de pression comprend un équipement de mesure de pression (4a, 4b, 4c) pour chaque gaz individuel ou gaz mixte.

16. Dispositif (10) selon la revendication 14, **caractérisé en ce que** l'équipement de mesure de pression comprend un unique équipement de mesure de pression (4a) pour mesurer la pression des gaz individuels ou gaz mixtes réunis.

17. Dispositif (10) selon la revendication 14, **caractérisé en ce que** l'équipement de mesure de pression comprend au moins un équipement de mesure de pression (4a) pour mesurer la pression d'au moins deux gaz individuels ou gaz mixtes réunis.

18. Dispositif (10) selon l'une des revendications 13 à 17, **caractérisé en ce que** l'équipement de régulation de débit volumique pour réguler le débit volumique d'un mélange gazeux comprend un équipement de régulation de débit volumique (1a, 1b, 1c) pour chaque gaz individuel ou gaz mixte du mélange gazeux.

19. Dispositif (10) selon l'une des revendications 13 à 18, **caractérisé en ce qu'**il comprend en outre un équipement (20) pour apporter un gaz secondaire ou gaz mixte secondaire ou mélange gazeux secondaire à la torche à plasma, et un équipement de régulation de débit volumique de gaz secondaire pour réguler le débit volumique du gaz secondaire ou gaz mixte secondaire ou mélange gazeux secondaire.

20. Dispositif (10) selon la revendication 19, **caractérisé en ce que** l'équipement de régulation de débit volumique de gaz secondaire est combiné à un équipement de régulation de pression de gaz secondaire pour réguler la pression du gaz secondaire ou gaz mixte secondaire ou mélange gazeux secondaire, de telle sorte que la valeur du débit volumique total passant par la buse (16) de gaz secondaire de la torche à plasma est régulée au moyen de l'équipement de régulation de pression et que les débits volumiques partiels qui forment le débit volumique total sont régulés au moyen de l'équipement de régulation de débit volumique, en tenant compte de la composition de gaz secondaire souhaitée.

21. Dispositif (10) selon l'une des revendications 13 à 20, **caractérisé en ce qu'**il comprend en outre un équipement d'alimentation en gaz de pré-flux pour l'apport séparé d'un gaz de pré-flux à la torche à plasma et un équipement de régulation de pression (17) pour réguler la pression du gaz de pré-flux, et/ou un équipement de pos-flux pour l'apport séparé d'un gaz de post-flux à la torche à plasma et un équipement de régulation de pression (17) pour réguler la pression du gaz de post-flux.

22. Dispositif (10) selon l'une des revendications 13 à 21, **caractérisé en ce que** le gaz est un gaz plasmagène, le gaz mixte un gaz mixte plasmagène, et le mélange gazeux un mélange gazeux plasmagène.

Figur 1

Figur 2

Figur 3

16

Figur 4

**IN DER BESCHREIBUNG AUFGEFÜHRTE DOKUMENTE**

**In der Beschreibung aufgeführte Patentdokumente**

- DE 19536150 C2
- EP 0697935 B1
- DD 54347
- DD 132247
- US 6972248 B1
- US 6359251B1 B
- DE 20121641 U1